# EUROPÄISCHE PATENTSCHRIFT

(11) **EP 1 393 663 B1**
(45) Veröffentlichungstag und Bekanntmachung des Hinweises auf die Patenterteilung: **29.11.2006**
(21) Anmeldenummer: 03405325.6
(22) Anmeldetag: 09.05.2003
(51) Int. Cl.: A47J 31/40, A47J 42/44

(54) **Kaffeemaschine mit einer handbetätigbaren Abdeckung eines Einlasses für Spezialkaffee und Verfahren zur Überwachung der Stellung dieser Abdeckung**
Coffee machine with a manually operated cover of a filling opening for special coffee and method for controlling the position of this cover
Machine à café avec un couvercle manoeuvrable manuellement pour un orifice de remplissage pour café spécial et méthode pour vérifier la position de ce couvercle

(30) Priorität: 29.08.2002 CH 14772002
(43) Veröffentlichungstag der Anmeldung: 03.03.2004
(73) Patentinhaber: JURA ELEKTROAPPARATE AG, CH-4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(56) Entgegenhaltungen:
- EP-A- 0 658 330
- DE-U- 29 508 248
- FR-A- 745 408
- US-B1- 6 324 965

## Beschreibung

Die Erfindung betrifft eine Kaffeemaschine mit einer handbetätigbaren Abdeckung eines Einlasses für Spezialkaffee gemäss Patentanspruch 1 sowie ein Verfahren zur Überwachung der Stellung dieser Abdeckung gemäss Patentanspruch 5.

Im speziellen betrifft die Erfindung eine von einem Prozessor gesteuerten Kaffeemaschine mit einer integrierten Kaffeemühle und einem Pulverschacht, wobei der Pulverschacht zur Zuführung von gemahlenem Kaffee aus der Kaffeemühle zu einem bewegbaren Brühzylinder dient und zudem einen mit einer handbetätigbaren Abdeckung versehenen Einlass für bereits gemahlenen Spezialkaffee aufweist.

Das erfindungsgemässe Verfahren betrifft die Überwachung der Stellung der handbetätigbaren Abdeckung durch den Prozessor zum Zweck der richtigen Initialisierung der Betriebsart der Kaffeemaschine für einen folgenden Kaffezubereitungszyklus.

Gattungsähnliche Kaffeemaschinen sind beispielsweise aus der DE-G-295 08 248.8 und der EP-0 658 339 bekannt. Die erstere zeigt eine Vorrichtung zur Dosierung von Kaffeepulver, die letztere ein Verfahren und eine Anordnung zur Reinigung einer Brühvorrichtung bei einer Kaffeemaschine. Die beiden Schriften zeigen, dass die Vorgänge zur Dosierung, Dosierungssteuerung und Reinigung bei Kaffeemaschinen bewegbaren Brühzylindern wohlbekannt sind. Eine weitere ähnliche Kaffeemaschine ist aus der US 6324965 B bekannt.

Weil bei Kaffeemaschinen dieser oder ähnlicher Bauweise grundsätzlich die Möglichkeit besteht, anstelle von (in der Kaffeemaschine) frisch gemahlenem Kaffee durch einen ohnehin vorhandenen Pulverschacht alternativ auch bereits gemahlenen Spezialkaffee einzufüllen, sind diese Maschinen oft mit einer zusätzlichen handbetätigbaren Klappe für einen Einlass von bereits gemahlenem Spezialkaffee in den Pulverschacht versehen.

Viele Kaffeemaschinen, die heute im Handel angeboten werden, weisen denn auch tatsächlich eine handbetätigbaren Klappe für den Einlass von bereits gemahlenem Spezialkaffee auf.

Unbefriedigend gelöst ist in diesen Fällen allerdings meist die Bedienung und der Bedienungsablauf bei der Herstellung von Spezialkaffee. So muss zur Auslösung der Herstellung eines Spezialkaffees diese Auswahl mittels einer Vorwahl über Bedienelemente an der Kaffeemaschine zu Beginn manuell getroffen werden. Aufgrund einer solchen Vorwahl 'erwartet' dann die Maschine, dass als nächster Bedienvorgang das manuelle Einfüllen von Spezialkaffee über die zusätzlichen vorhandene handbetätigbaren Klappe zu erfolgen hat. Störungen treten insbesondere dann auf, wenn die genannte Vorwahl vergessen wird. Es besteht die Gefahr der Überfüllung.

Es ist ein Ziel der vorliegenden Erfindung, eine gattungsgemässe Kaffeemaschine anzugeben, bei der die Bedienung erleichtert ist und die weniger störanfällig ist.

Diese Aufgabe wird durch die in den Kennzeichen der Patentansprüche 1 und 5 genannten Merkmale gelöst.

Die Lösung beinhaltet, dass ein Sensor zur Erfassung der Stellung der handbetätigbaren Abdeckung des Einlasses für den bereits gemahlenen Spezialkaffee vorhanden ist, das Erfassungssignal des Sensors einem Prozessor, der die Kaffeemaschine steuert, zugeführt wird, und dass ausserdem das Erfassungssignal vom Prozessor zur Unterscheidung zwischen einer Normalbetriebsart und einer Betriebsart zur Herstellung von Spezialkaffee verwendet wird. Für den Fall, dass der Prozessor auf diese Weise registriert, dass die Abdeckung während einer bestimmten Mindestzeitdauer geöffnet worden ist, wird ein nächstfolgender Kaffeezubereitungszyklus in der Betriebsart zur Herstellung von Spezialkaffee initialisiert.

Die Vorteile, die sich daraus ergeben, bestehen insbesondere darin, dass ein Benutzer, der Spezialkaffee trinken will, diese Vorwahl nicht mehr manuell treffen muss. Vielmehr erkennt die Kaffeemaschine diese Absicht automatisch durch Überwachung der handbetätigbaren Abdeckung des Einlasses für den bereits gemahlenen Spezialkaffee. Der Benutzer muss nach dem Einfüllen von Spezialkaffe nur noch eine (Wasser-) Mengenauswahl treffen und den Brühvorgang auslösen.

Im einfachsten Fall besteht die Erkennung dieser Absicht einfach darin, dass die Maschine registriert, dass die handbetätigbare Abdeckung des Einlasses für den bereits gemahlenen Spezialkaffee für eine bestimmte Mindestzeitdauer geöffnet worden ist. Obwohl damit noch nicht garantiert ist, dass auch tatsächlich Spezialkaffeepulver eingefüllt wurde, kann davon ausgegangen werden, dass dies in den meisten Fällen der Fall sein dürfte. Es kann somit in der Folge bereits ein Kaffeezubereitungszyklus in einer Betriebsart zur Herstellung von Spezialkaffee initialisiert werden.

Es können natürlich weitere Massnahmen vorgesehen werden, mit denen sichergestellt werden soll, dass ein Einfüllvorgang für Spezialkaffee so zuverlässig wie möglich erkannt wird. Derartige Massnahmen sind in den Unteransprüchen beschrieben.

Eine dieser Massnahmen kann auf relativ einfache Weise realisiert werden, indem eine gattungsgemässe Kaffeemaschine eingesetzt wird, bei der der Brühzylinder in eine Arbeitsstellung mit einer Brüheinheit schwenkbar ist, die Brüheinheit einen verstellbaren und in den Brühzylinder einfahrbaren Brühkolben aufweist und bei der eine Verstellposition des Brühkolbens messbar und vom Prozessor registrierbar ist. In diesen Fällen kann die registrierte Verstellposition des Brühkolbens in der Betriebsart zur Herstellung von Spezialkaffee dazu dienen, das Vorhandensein und die vorhandene Menge von Spezialkaffee im Brühzylinder festzustellen. Wird nämlich der Brühkolben in den mit Spezialkaffee gefüllten Brühzylinder eingefahren oder eingetaucht, so erreicht der Brühkolben die Endstellung im Bereich des Grundes des Brühzylinders nicht. Aufgrund der Eintauchtiefe kann also nicht nur das Vorhandensein, sondern auch die vorhandene Menge von eingefülltem Kaffee im Brühzylinder festgestellt werden.

Eine weitere, direktere Massnahme zur Feststellung, ob ein Einfüllvorgang für Spezialkaffee erfolgt ist, besteht darin, dass zusätzliche Detektierungsmittel im Pulverschacht angebracht werden. Diese zusätzlichen Detektierungsmassnahmen registrieren Einfüllvorgänge während des Offenstehens der Abdeckung. Der Brühvorgang in der Betriebsart zur Herstellung von Spezialkaffee wird nur dann eingeleitet, wenn der Prozessor aufgrund der Signale der zusätzlichen Detektierungsmittel festgestellt hat, dass Spezialkaffee tatsächlich eingefüllt worden ist. Die dazu eingesetzten Sensoren müssen in der Lage sein, den Einfüllvorgang zuverlässig zu erkennen, was in einer Umgebung, die naturgemäss einer hohen (Kaffee)Pulverstaubverschmutzung ausgesetzt ist, besonders hohe Anforderungen an die Sensoren stellt und überdies zumeist prozessorseitig noch zusätzliche Filtermethoden erfordert, um Fehldetektierungen zu vermeiden oder zumindest zu vermindern.

Eine bevorzugte Ausführungsform zur Ausführung der Erfindung wird im folgenden anhand von Figuren erläutert. Es zeigen
- Fig. 1: eine Kaffeemaschine mit einer handbetätigbaren Abdeckung eines Einlasses für Spezialkaffee mit geöffneter Abdeckung und einem Brühzylinder in Füll-Position, und
- Fig. 2: eine Kaffeemaschine nach Fig. 1 mit geschlossener Abdeckung und dem Brühzylinder in Brüh-Position.

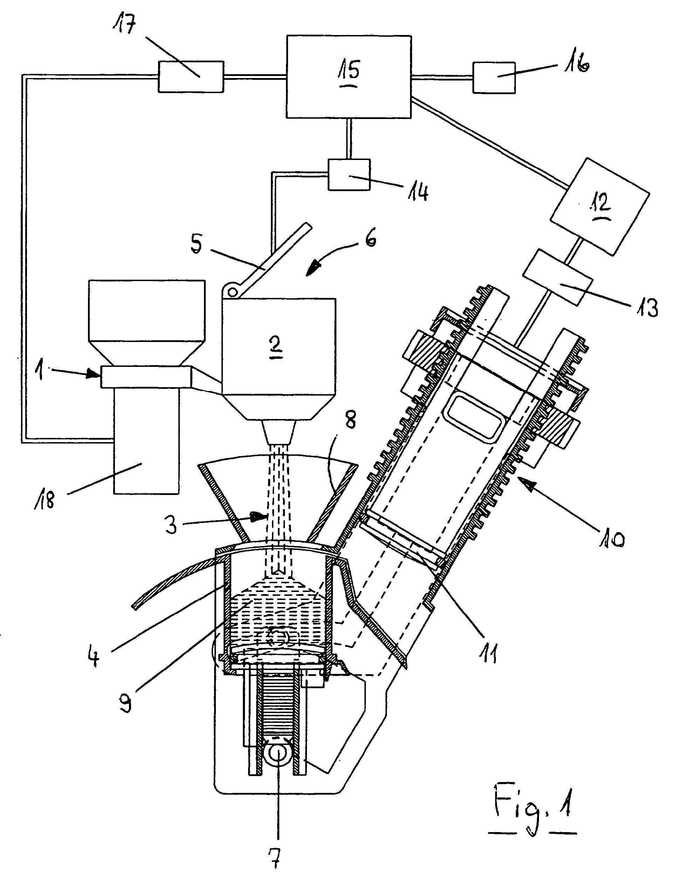

Die Figur 1 zeigt eine erfindungsgemässe Kaffeemaschine mit einer integrierten Kaffeemühle 1 und einem Pulverschacht 2, wobei der Pulverschacht zur Zuführung von gemahlenem Kaffee 3 aus der Kaffeemühle 1 zu einem bewegbaren Brühzylinder 4 dient und einen mit einer handbetätigbaren Abdeckung 5 versehenen Einlass 6 für bereits gemahlenen Spezialkaffee aufweist. Die Abdeckung 5 ist in dieser Darstellung geöffnet. Der Brühzylinder 4 ist um einen Drehpunkt 7 schwenkbar angeordnet und befindet sich in der sogenannten "Füllposition", in der gemahlener Kaffee (Normalkaffee aus der Kaffeemühle 1 oder Spezialkaffee vom Einlass 6) über den Pulverschacht 2 und einen Führungstrichter 8 in den Brühzylinder 4 einfüllbar sind. Hier wird angenommen, dass Spezialkaffee über den Einlass 6 eingefüllt worden ist und sich demzufolge Mahlgut 9 im Brühzylinder 4 befindet.

Die handbetätigbare Abdeckung 5 kann beispielsweise als Klappe oder als Schieber ausgebildet sein.

Die Kaffeemaschine weist ferner eine Brüheinheit 10 mit einem in der Brüheinheit 10 linear bewegbaren und in den Brühzylinder 4 ein- und ausfahrbaren Brühkolben 11 auf. Der Brühkolben 11 ist über einen Motor 12 linear beweg- und verstellbar und die Verstellposition des Brühkolbens 11 wird von einem Positionsencoder 13 erfasst und gemessen. Da sich der Brühzylinder 4 in dieser Darstellung in der "Füllposition" befindet, ist hier der Brühkolben 11 zurückgezogen und befindet sich in der Brüheinheit 10.

Die Stellung der Abdeckung 5 des Einlasses 6 wird von einem Sensor 14 überwacht. Der Sensor 14 erfasst die Stellung der Abdeckung 5 und liefert ein Erfassungssignal an einen Prozessor 15, der die Kaffeemaschine steuert. Das Erfassungssignal wird vom Prozessor 15 zur Unterscheidung zwischen einer Normalbetriebsart und einer Betriebsart zur Herstellung von Spezialkaffee verwendet. Es wird davon ausgegangen, dass ein Kaffeezubereitungszyklus in einer Betriebsart zur Herstellung von Spezialkaffee jeweils dann erfolgen soll, wenn die Abdeckung 5 während einer bestimmten Mindestzeitdauer geöffnet wird.

Der Sensor 14 kann beispielsweise ein gängiger Endschalter oder ein kontaktlos arbeitender Bauteil sein.

Wie erwähnt, werden die Funktionen und Abläufe der Kaffeemaschine vom Prozessor 15 gesteuert. Die Einrichtungen und Verbindungen zur Erfüllung dieser Steuerfunktionen sind lediglich schematisch dargestellt, da sie dem Fachmann grundsätzlich bekannt sein dürften. So weist der Prozessor 15 nicht nur Verbindungen zum Motor 12 und zum Sensor 14 auf, sondern auch zu einem Speicher 16 (Programm- und Datenspeicher), zu einem Bedien- und Anzeigepanel 17 und zu einem Mühlemotor 18 für die Kaffeemühle 1.

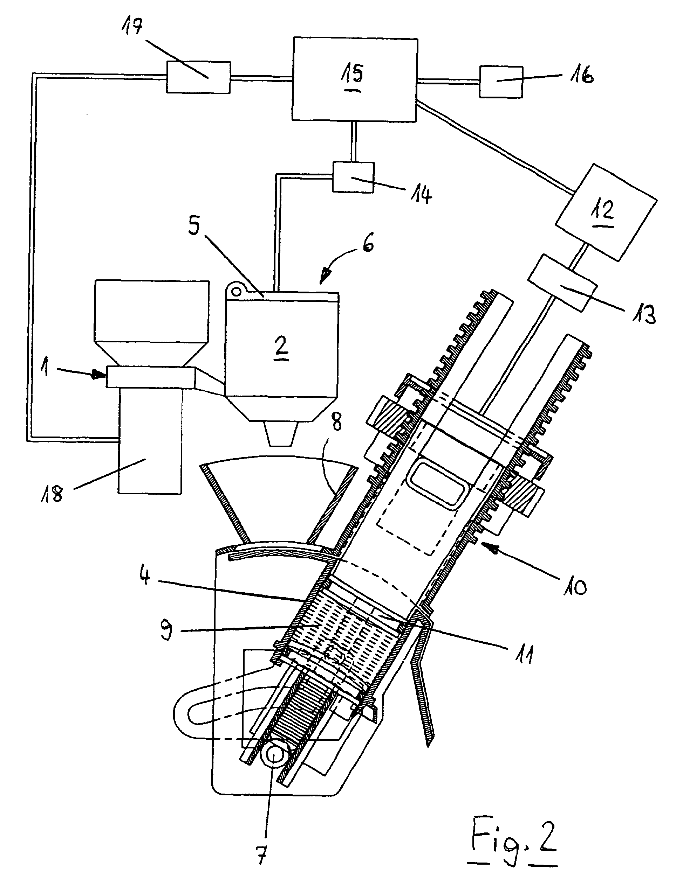

Bei der Figur 2 wird davon ausgegangen, dass der Einfüllvorgang von gemahlenem Kaffee in den Brühzylinder 4 abgeschlossen ist. Das Mahlgut 9 befindet sich im Brühzylinder 4. Der Brühzylinder 4 wurde in eine sogenannte "Brühposition", geschwenkt, in der der Brühkolben 11 der Brüheinheit 10 vom Motor 12 in den Brühzylinder 4 eingefahren werden kann. Der Brühkolben 11 wird dabei soweit eingefahren, dass das Mahlgut 9 etwas komprimiert wird. Die erreichte Verstellposition des Brühkolbens 11 wird dabei vom Positionsencoder 13 gemessen und dem Prozessor 15 übermittelt. Aufgrund der festgestellten Werte (Druck / Position) kann der Prozessor 15 entscheiden, ob die Parameter innerhalb der Sollwerte liegen und ob der Brühvorgang gestartet werden soll.

Bei einem Brühvorgang mit Normalkaffee von der Kaffeemühle 1 liefert die letztere die 'richtige' Kaffeemenge, sodass der Brühvorgang in der Regel ohne weiteres gestartet werden kann.

Vor der Auslösung eines Brühvorgangs mit Spezialkaffee (eingefüllt durch den Einlass 6) kann der Prozessor 15 via die registrierte Verstellposition des Brühkolbens 11 (Eintauchtiefe des Brühkolbens in den Brühzylinder) anhand der festgestellten Messwerte des Positionsencoders 13 bestimmen, ob zu wenig oder eventuell auch zu viel Mahlgut 9 eingefüllt wurde. Falls der Brühkolben 11 eine Endstellung im Bereich des Grundes des Brühzylinders erreicht, kann davon ausgegangen werden, dass offenbar kein gemahlener Spezialkaffee eingefüllt wurde. Falls zu viel Spezialkaffee eingefüllt wurde, ist zu erwarten, dass ein Teil des eingefüllten Spezialkaffees zunächst im Führungstrichter 8 verbleibt und in der Folge unter Umständen weitere Störungen verursacht.

Wenn also überwacht wird, ob die Abdeckung 5 des Einlasses 6 für eine Mindestzeitdauer geöffnet bleibt, so stellt dies bei einer gattungsgemässen Kaffeemaschine lediglich ein Indiz für die Erkennung dar, ob die Herstellung eines Spezialkaffees erfolgen soll. Es bleibt zu beachten, dass der Einfüllvorgang für sich, nämlich das Durchrieseln von gemahlenem Spezialkaffee durch den Pulverschacht 2 währenddem die Abdeckung 5 geöffnet ist, nicht unmittelbar detektiert, sondern lediglich als vermutlicher Folgevorgang deduziert wird. In den meisten Fällen dürfte die Überwachung der Stellung und der Öffnungsdauer der Abdeckung 5 des Pulverschachtes 2 jedoch genügen, um eine ausreichende Funktionssicherheit zu erzielen.

Es können aber noch weitere und zum Teil direktere Massnahmen vorgesehen sein, um den Einfüllgang für Spezialkaffee so zuverlässig wie nur möglich zu erkennen.

Bei gattungsgemässen Kaffeemaschinen mit mess- und registrierbaren Verstellpositionen des Brühkolbens 11 kann, wie oben bereits erwähnt, zumindest auf indirekte Weise festgestellt werden, ob ein Einfüllvorgang für Spezialkaffee tatsächlich stattgefunden hat. Dies sollte nämlich genau dann der Fall sein, wenn (in Brühposition) der Brühkolben 11 in etwa seine Sollposition im Brühzylinder 4 erreicht und nicht bis in die Endstellung im Bereich des Grundes des Brühzylinders 4 eintaucht. Es ist also möglich, den Brühvorgang in der Betriebsart zur Herstellung von Spezialkaffee nur dann einzuleiten, wenn der Prozessor 15 aufgrund einer gemessenen und registrierten Verstellposition des Brühkolbens 11 feststellen kann, dass sich Spezialkaffee im Brühzylinder 4 befindet.

Es können beispielsweise auch zusätzliche (nicht dargestellte) Detektierungsmittel im Pulverschacht 2 vorhanden sein, mit denen das Durchrieseln von gemahlenem Spezialkaffee durch den Pulverschacht 2, währenddem die Abdeckung 5 geöffnet ist, festgestellt werden kann. Derartige Detektierungsmittel können als verschmutzungsunempfindliche Lichtschranken, als andere berührungslos arbeitende Sensorelemente, als bewegungserfassende Sensorelemente oder auch als berührungsempfindliche Detektierungsmittel ausgebildet sein. Es ist also möglich, den Brühvorgang in der Betriebsart zur Herstellung von Spezialkaffee nur dann einzuleiten, wenn der Prozessor 15 aufgrund der Signale der zusätzlichen Detektierungsmittel feststellen kann, dass Spezialkaffee eingefüllt worden ist.

Da die vorher erwähnten Detektierungsmittel naturgemäss einer hohen (Kaffee-)Pulverstaubverschmutzung ausgesetzt sind, stellt dies besonders hohe Anforderungen an die Sensoren, und es müssen überdies prozessorseitig noch zusätzliche Signalfiltermethoden angewendet werden, um Fehldetektierungen zu vermeiden oder zumindest zu vermindern.

Selbstverständlich können die vorgeschlagenen Massnahmen einzeln oder auch kombiniert zur Anwendung gelangen wie in den Ansprüchen definiert.

### Bezugsziffernliste:

- 1: Kaffeemühle
- 2: Pulverschacht
- 3: gemahlener Kaffee
- 4: Brühzylinder
- 5: Abdeckung
- 6: Einlass
- 7: Drehpunkt
- 8: Führungstrichter
- 9: Mahlgut
- 10: Brüheinheit
- 11: Brühkolben
- 12: Motor
- 13: Positionsencoder
- 14: Sensor
- 15: Prozessor
- 16: Speicher
- 17: Bedien- und Anzeigepanel
- 18: Mühlemotor

## Patentansprüche

1. Kaffeemaschine mit einer integrierten Kaffeemühle (1) und einem Pulverschacht (2), wobei der Pulverschacht (2) zur Zuführung von gemahlenem Kaffee (3) aus der Kaffeemühle (1) zu einem bewegbaren Brühzylinder (4) dient und einen mit einer handbetätigbaren Abdeckung (5) versehenen Einlass (6) für bereits gemahlenen Spezialkaffee aufweist, **dadurch gekennzeichnet, dass** ein Sensor (14) zur Erfassung der Stellung der Abdeckung (5) vorhanden ist und ein Erfassungssignal des Sensors (14) einem Prozessor (15), der die Kaffeemaschine steuert, zugeführt wird und das Erfassungssignal vom Prozessor (15) zur Unterscheidung zwischen einer Normalbetriebsart und einer Betriebsart zur Herstellung von Spezialkaffee verwendet wird.

2. Kaffeemaschine nach Patentanspruch 1, **dadurch gekennzeichnet, dass** der Brühzylinder (4) in eine Arbeitsstellung mit einer Brüheinheit (10) schwenkbar ist, die Brüheinheit (10) einen verstellbaren und in den Brühzylinder (4) einfahrbaren Brühkolben (11) aufweist, wobei eine Verstellposition des Brühkolbens (11) messbar und vom Prozessor (15) registrierbar ist und die registrierte Verstellposition des Brühkolbens (11) in der Betriebsart zur Herstellung von Spezialkaffee dazu dient, das Vorhandensein und die vorhandene Menge von Spezialkaffee im Brühzylinder (4) festzustellen.

3. Kaffeemaschine nach Patentanspruch 1 oder 2, **dadurch gekennzeichnet, dass** die Abdeckung (5) eine Klappe oder ein Schieber ist.

4. Kaffeemaschine nach einem der Patentansprüche 1 bis 3, **dadurch gekennzeichnet, dass** der Sensor (14) ein Endschalter oder ein kontaktlos arbeitender Bauteil ist.

5. Verfahren zur Überwachung der Stellung einer Abdeckung (5) eines Einlasses (6) eines Pulverschachtes (2) bei einer von einem Prozessor (15) gesteuerten Kaffeemaschine nach Patentanspruch 1, **dadurch gekennzeichnet, dass** im Falle der Registrierung durch den Prozessor (15), dass die Abdeckung (5) während einer bestimmten Mindestzeitdauer geöffnet worden ist, ein nächstfolgender Kaffeezubereitungszyklus in einer Betriebsart zur Herstellung von Spezialkaffee initialisiert wird.

6. Verfahren nach Patentanspruch 5 für eine Kaffeemaschine bei der der Brühzylinder (4) in eine Arbeitsstellung mit einer Brüheinheit (10) schwenkbar ist, die Brüheinheit (10) einen verstellbaren und in den Brühzylinder (4) einfahrbaren Brühkolben (11) aufweist und wobei eine Verstellposition des Brühkolbens (11) messbar und vom Prozessor (15) registrierbar ist, **dadurch gekennzeichnet, dass** der Brühvorgang in der Betriebsart zur Herstellung von Spezialkaffee nur dann eingeleitet wird, wenn der Prozessor (15) aufgrund einer gemessenen und registrierten Verstellposition des Brühkolbens (11) festgestellt hat, dass sich Spezialkaffee im Brühzylinder befindet.

7. Verfahren nach Patentanspruch 5, **dadurch gekennzeichnet, dass** zusätzliche Detektierungsmittel im Pulverschacht (2) vorhanden sind, mit deren Hilfe feststellbar ist, ob Spezialkaffee während des Offenstehens der Abdeckung (5) eingefüllt wird, und der Brühvorgang in der Betriebsart zur Herstellung von Spezialkaffee nur dann eingeleitet wird, wenn der Prozessor (15) aufgrund der Signale der zusätzlichen Detektierungsmittel festgestellt hat, dass Spezialkaffee eingefüllt worden ist.

8. Verfahren nach Patentanspruch 7, **dadurch gekennzeichnet, dass** die zusätzlichen Detektierungsmittel im Pulverschacht (2) verschmutzungsunempfindliche Lichtschranken, andere berührungslos arbeitende Sensorelemente, bewegungserfassende Sensorelemente oder auch berührungsempfindliche Detektierungsmittel sind, und dass im Prozessor (15) Filterverfahren verwendet werden, um Fehldetektierungen von Einfüllvorgängen zu vermeiden oder zu vermindern.

## Claims

1. A coffee machine comprising an integrated coffee grinder (1) and a powder shaft (2) whereby the powder shaft (2), which serves for feeding ground coffee (3) from the coffee grinder (1) to a movable brewing cylinder (4), features an inlet (6) fitted with a manually operated cover (5) for pre-ground special coffee, **characterised in that** a sensor (14) is provided to detect the position of the cover (5) and that a detection signal of the sensor (14) is transmitted to a processor (15) which controls the coffee machine and which uses the detected signal for differentiating between a normal mode of operation and an operation mode for brewing special coffee.

2. The coffee machine according to claim 1 **characterised in that** the brewing cylinder (4) can be swivelled into an operating position with a brewing unit (10) and that the brewing unit (10) features an adjustable brewing piston (11) insertable into the brewing cylinder (4), whereby an adjusted position of the brewing piston (11) is measureable and can be registered by the processor (15), with the registered position of the brewing piston (11) in the operating mode for brewing special coffee serving to ascertain whether and how much special coffee is available in the brewing cylinder (4).

3. The coffee machine according to claims 1 or 2 **characterised in that** the cover (5) is designed as a hinged or a sliding lid.

4. The coffee machine according to any of the claims 1 to 3 **characterised in that** the sensor (14) is designed as a limit switch or a contact-free element.

5. A method for controlling the position of a cover (5) of an inlet (6) to a powder shaft (2) in the coffee machine controlled by a processor (15) according to claim 1, **characterised in that**, if the processor (15) detects that the cover (5) has been open for a minimum period of time, the immediately following coffee brewing cycle is initiated to be the cycle for producing special coffee.

6. The method according to claim 5 for a coffee machine in which the brewing cylinder (4) can be swivelled into an operating position with a brewing unit (10), where the brewing unit (10) features an adjustable brewing piston (11) insertable into the brewing cylinder (4) and whereby an adjusted position of the brewing piston (11) is measureable and can be registered by the processor (15), **characterised in that** the brewing process in the operating mode for brewing special coffee will be initiated only when the processor (15) has ascertained on the basis of the measured and registered position of the brewing piston (11) that any special coffee is available in the brewing cylinder (4).

7. The method according to claim 5 **characterised in that** additional detection agents are provided in the powder shaft (2) which facilitate the detection of any special coffee being added when the cover (5) is open and that the brewing process in the operating mode for brewing special coffee will be initiated only when the processor (15) has ascertained on the basis of the signals from the additional detection agents that any special coffee has been added.

8. The method according to claim 7 **characterised in that** the additional detection agents provided in the powder shaft (2) are contamination-resistant light barriers, other sensoring elements operating in a contact-free manner, movement-registering sensoring elements or touch-sensitive detection agents and that filter processes are employed in the processor (15) to avoid or reduce any faulty detections of the filling processes.

## Revendications

1. Machine à café avec un moulin à café intégré (1) et un compartiment à poudre (2), le compartiment à poudre (2) permettant d'amener le café moulu (3) du moulin à café (1) vers un cylindre de préparation mobile (4) et comportant une entrée (6) pourvue d'un couvercle manuel (5) pour le café déjà moulu, **caractérisée par** un sensor (14) servant à détecter la position du couvercle (5), un signal d'admission étant transmis par le sensor (14) à un processeur (15) qui commande la machine à café, le signal d'admission étant utilisé par le processeur (15) pour différencier un fonctionnement normal d'un fonctionnement pour la fabrication du café spécial.

2. Machine à café selon la revendication 1, **caractérisée en ce que** le cylindre de préparation (4) peut être déplacé dans une position de fonctionnement avec une unité de préparation (10) de façon pivotante et **en ce que** l'unité de préparation (10) comporte un piston de préparation (11) réglable qui s'introduit dans le cylindre de préparation (4), la position de réglage du piston de préparation (11) pouvant être mesurée et enregistrée par un processeur (15), et la position de réglage du piston de préparation (11) enregistrée en mode de fonctionnement pour la fabrication de café spécial permet ainsi de constater la disponibilité et la quantité de café spécial dans le cylindre de préparation (4).

3. Machine à café selon la revendication 1 ou 2, **caractérisée en ce que** le couvercle (5) est conçu comme un clapet ou bien de façon coulissante.

4. Machine à café selon l'une des revendications 1 à 3, **caractérisée en ce que** le sensor (14) est conçu comme un interrupteur final ou comme un élément de construction fonctionnant séparément sans contact.

5. Procédé pour le contrôle de la position du couvercle (5) couvrant l'admission (6) d'un compartiment à poudre (2) sur une machine à café selon la revendication 1, commandée par un processeur (15), **caractérisé en ce qu'**un cycle de préparation de café est lancé d'après un mode de fonctionnement pour la fabrication de café spécial lorsque le processeur (15) enregistre l'ouverture du couvercle (5) sur une durée minimale.

6. Procédé selon la revendication 5 pour une machine à café avec un cylindre de préparation pouvant être pivoté dans une position de fonctionnement avec une unité de préparation (10), l'unité de préparation (10) comportant un piston de préparation (11) réglable qui s'introduit dans le cylindre de préparation (4), la position de réglage du piston de préparation (11) étant mesurée et enregistrée par le processeur (15), **caractérisé par le fait qu'**en mode de fabrication de café spécial, le processus de préparation ne peut être lancé que si le processeur (15) constate que du café spécial est disponible dans le cylindre de préparation (4) suite à l'enregistrement d'une position de réglage mesurée du piston de préparation (11).

7. Procédé selon la revendication 5, **caractérisé par** des moyens de détection supplémentaires présents dans le compartiment à poudre (2), permettant de constater si le café spécial est rechargé pendant que le couvercle (5) est ouvert, et le processus de préparation n'est lancé en mode de fabrication de café spécial que si le processeur (15) a pu constater à partir des signaux émis par les moyens de détection supplémentaires que du café spécial a été rechargé.

8. Procédé selon la revendication 7, **caractérisé en ce que** les moyens de détection supplémentaires dans le compartiment à poudre (2) sont des barrières lumineuses résistantes aux salissures ou d'autres sensors fonctionnant sans contact, des sensors capteurs de mouvements ou des moyens de détection sensibles au contact, et **en ce que** des procédés de filtrage sont utilisés dans le processeur (15), pour éviter ou diminuer les détections erronées.
